**Europäisches Patentamt**

(19) **European Patent Office**

**Office européen des brevets**

(11) Veröffentlichungsnummer: **0 153 622**

**A2**

(12) ## EUROPÄISCHE PATENTANMELDUNG

(21) Anmeldenummer: 85101221.1

(22) Anmeldetag: 06.02.85

(51) Int. Cl.⁴: **B 60 N 1/06**

(30) Priorität 08.02.84 DE 3404379

(43) Veröffentlichungstag der Anmeldung.
04.09.85 Patentblatt 85/36

(84) Benannte Vertragsstaaten:
DE FR GB

(71) Anmelder: C. Rob. Hammerstein GmbH
Postfach 13 01 18 Merscheiderstrasse167
D-5650 Solingen 13(DE)

(72) Erfinder: Bauer, Heinz
Hammerstrasse 9
D-5650 Solingen 11(DE)

(72) Erfinder Becker. Burckhard. Dipl.-Ing
Obenkatternberg 25
D-5650 Solingen 11(DE)

(72) Erfinder: Frohnhaus, Ernst-Reiner
Hammerstrasse 13
D-5650 Solingen 11(DE)

(72) Erfinder: Gedig, Alfred, Dipl.-Ing.
Hammerstrasse 28
D-5650 Solingen 11(DE)

(72) Erfinder: Kunes, Josef
Bertha von Suttner Strasse 17
D-5650 Solingen 1(DE)

(74) Vertreter: Bauer, Wulf, Dr.
Wolfgang-Müller-Strasse 12
D-5000 Köln 51 (Marienburg)(DE)

(54) **Kopfstütze eines Fahrzeugsitzes mit zwei an der Sitzlehne befestigbaren Tragholmen.**

(57) Bei der Kopfstütze eines Fahrzeugsitzes sind zwei an der Sitzlehne befestigbare Tragholme (20, 22) mit einem ein Stutzkissen (48) tragenden Rahmen verbunden, der zwei starr miteinander verbundene Seitenteile (44, 46) aufweist, gelenkig mit den Tragholmen (20, 22) verbunden und quer zu den Tragholmen (20, 22) verstellbar ist.

Erfindungsgemäß sind zur Erzielung einer weitgehend parallelen Verstellung des Rahmens in Stützrichtung (28), praktisch ohne Hohenverstellung, an jedem Seitenteil (44, 46) jeweils zwei Gelenkglieder (32, 34) angelenkt, die ihrerseits an den Holmen (20, 22) bzw. einem starr mit diesen verbundenen Träger (26) angelenkt sind.

FIG. 1

Croydon Printing Company Ltd

Anmelder:    Firma C. Rob. Hammerstein GmbH
             in 5650 Solingen 13

Bezeichnung: Kopfstütze eines Fahrzeugsitzes mit zwei an
             der Sitzlehne befestigbaren Tragholmen.

---

Die Erfindung bezieht sich auf eine Kopfstütze eines Fahrzeugsitzes mit zwei an der Sitzlehne befestigbaren Tragholmen und einem ein Stützkissen tragenden Rahmen, der zwei starr miteinander verbundene Seitenteile aufweist, gelenkig mit den Tragholmen verbunden und quer zu diesen verstellbar ist.

Die aus der DE-OS 29 11 321 bekannte Kopfstütze der eingangs genannten Art kann durch Drehen an einem seitlich vorstehenden Drehknopf gegenüber den Tragholmen verschwenkt werden. In an sich bekannter Weise kann die Höhe der Kopfstütze gegenüber der Rückenlehne des Fahrzeugsitzes durch Einschieben oder Ausziehen der Tragholme eingestellt werden. Weiterhin ist aus der DE-OS 28 10 870 ebenfalls eine Kopfstütze der eingangs genannten Art bekannt, die gleichfalls mittels eines Drehknopfes in unterschiedliche Schwenkpositionen einstellbar ist. Dabei hat das eigentliche Stützkissen quer zu seiner Schwenkachse eine längliche Profilform, so daß bei einem Schwenken der obere Kissenbereich mehr oder weniger nach vorn kommt, wodurch sich eine mehr oder weniger vorn befindliche Abstützung ergibt.

Diese Ausbildungen haben jedoch den Nachteil, daß die Kopfstütze im wesentlichen nur eine linienhafte Abstützung gibt, insbesondere bei starker Neigungsstellung des Stützkissens, und daß bei einer Neigungseinstellung des Stützkissens zugleich auch die Höhe der Abstützungslinie sich bedingt durch den relativ kleinen Schwenkradius stark ändert. Darüberhinaus ist ein seitlich am Stützkissen befindlicher Drehknopf für einen Benutzer recht schwer bedienbar, da er sich an einer insbesondere für eine Drehbewegung griffungünstigen Position befindet.

Ausgehend von den bekannten Kopfstützen für Fahrzeugsitze ist es nun Aufgabe der Erfindung, die Nachteile dieser neigungsverstellbaren Kopfstützen zu vermeiden und eine Kopfstütze zu schaffen, die quer zu den Tragholmen und damit in Stützrichtung im wesentlichen parallel und weitgehend ohne eine Höhenveränderung verstellbar ist. Dabei soll zusätzlich erreicht werden, daß das Stützkissen an beliebiger Stelle ergriffen und verstellt werden kann, ohne daß dies einen Einfluß auf die geführte Parallelbewegung der Abstützfläche des Stützkissens hat.

Ausgehend von den eingangs genannten Merkmalen der vorbekannten Kopfstützen wird diese Aufgabe dadurch gelöst, daß zur Erzielung einer weitgehend parallelen Verstellung des Rahmens in Stützrichtung, praktisch ohne Höhenverstellung, an jedem Seitenteil jeweils zwei Gelenkglieder um Gelenkpunkte schwenkbar angelenkt sind und daß diese Gelenkglieder ihrerseits an den Tragholmen bzw. an einem mit diesen starr verbundenen Träger in Gelenkpunkten angelenkt sind.

Im Gegensatz zu den vorbekannten Kopfstützen wird die erfindungsgemäße Kopfstütze also nicht um eine Schwenkachse neigungsverstellt, sondern parallel geführt. Dies hat den Vorzug, daß die Abstützfläche in allen Einstellpositionen für den Benutzer praktisch eine konstante Größe hat und in keiner Einstellposition eine für das Abstützen unbequeme Neigung einnimmt. Die Verstellbarkeit ohne äußeren Drehknopf oder ein anderes Betätigungsorgan hat den Vorzug, daß eine Einstellkraft praktisch an beliebiger Stelle des Stützkissens angreifen kann, anders ausgedrückt das gesamte Stützkissen die Handhabe für eine Einstellbewegung bildet. Der Benutzer muß damit nicht ein spezielles Einstellorgan suchen, er kann in Sitzposition ungezielt hinter sich greifen, bis er das Stützkissen faßt, das er nun in eine bequeme Position einstellen kann. In an sich bekannter Weise wird dabei zugleich eine Höheneinstellung des Stützkissens ermöglicht. Der Benutzer kann damit durch den beschriebenen Griff nach hinten seine Kopfstütze komplett einstellen, also sowohl in Stützrichtung als auch in Richtung der Tragholme. Die Einstellbarkeit ist damit wesentlich bequemer als bei den vorbekannten Kopfstützen.

In bevorzugter Weiterbildung der Erfindung ist eine Rastvorrichtung zwischen dem Rahmen des Stützkissens und den Holmen vorgesehen, die ohne einen separaten Auslösemechanismus verstellbar ist. Dadurch wird erreicht, daß das Stützkissen in vorgegebenen, abgestuften Rastpositionen so gehalten wird, daß bei normaler Benutzung und Belastung eine Verstellung nicht auftritt. Anders ausgedrückt wird die Rastvorrichtung zwar dann überwunden und verstellt, wenn ein Benutzer das Stützkissen greift und in eine ihm genehme Position drückt oder zieht, es wird aber nicht verstellt, wenn sich ein Kopf mit der üblichen, normalen Anlagekraft am Stützkissen abstützt. Bei unfallbedingten Belastungen des Stützkissens reicht die Haltekraft der Rastvorrichtung nicht aus, hierzu ist mindestens ein Endbereich der Rastvorrichtung oder ein sonstiger Anschlagbereich zwischen Rahmen und Holmen elastisch ausgebildet, beispielsweise mit einem elastischen Puffer versehen, jedenfalls als starrer Anschlag ausgebildet, der auch unfallbedingten Belastungen widersteht.

In vorzugsweiser Weiterbildung der Erfindung sind die Gelenkglieder als zweiarmige Hebel ausgeführt, ihre zusätzlichen, zweiten Arme sind miteinander mittels einer Kupplungsvorrichtung bewegungsverbunden. Diese weist in bevorzugter Weiterbildung eine Verzahnung an den Enden der Arme, ein Schubgelenk oder eine verbindende Koppel auf, was andere Ausführungen nicht ausschließt. Insgesamt wird hierdurch eine parallele Zwangsführung der beiden Seitenteile des Rahmens gegenüber den Holmen erzielt und vermieden, daß der Rahmen sich gegenüber den Holmen winklig stellen kann. Die Kupplungsvorrichtung ist so ausgelegt, daß sie eine exakte Parallelstellung der Gelenkglieder beider Seiten erzwingt.

Dabei sind die Gelenkglieder entweder um eine rechtwinklig zu den Tragholmen verlaufende und die beiden Tragholme verbindende Achse drehbar, wodurch sie sich in der Fläche der Seitenteile befinden und eine exakt spiegelbildliche Anordnung möglich ist, oder die Gelenkglieder sind um die Holme als Achse selbst schwenkbar gelagert, so daß ihre Enden beim Verstellen des Stützkissens in Stützrichtung schwenken. Die letzte Ausbildung erfordert als Kupplungsvorrichtung ein Schubgelenk, wodurch die Teile beider Seiten der Kopfstütze nicht mehr exakt gleich und damit austauschbar sind. Es kann jedoch auch vorgesehen werden, daß die Seitenteile des Stützkissens nicht starr miteinander verbunden sind, vielmehr in Querrichtung zueinander verschiebbar geführt sind. Hierzu springen beispielsweise von einem Seitenteil zwei Stangen vor, die von Rohren des anderen Seitenteils führend umgriffen werden. Bei einer Verstellbewegung verändert sich dann zwar der Abstand der Seitenteile und damit die Breite des Stützkissens, diese Änderung ist aber gering und bleibt bei einer entsprechend angepaßten Ausbildung des Stützkissens, insbesondere seines Bezugs, für den Benutzer unbemerkt.

In einer anderen, alternativen Ausführung sind die Gelenkglieder einarmig ausgeführt und bewegen sich ebenfalls in der Ebene der Seitenteile. Die beiden einarmigen Gelenkglieder jedes Seitenteils verlaufen dabei im wesentlichen parallel zueinander, so daß sich insgesamt ein Gelenkviereck mit sich X-förmig kreuzenden, durch jeweils ein Seitenteil und die Holme bzw. den mit diesen verbundenen Träger gebildeten Gelenkarmen ergibt.

Weitere Merkmale und Vorteile der Erfindung ergeben sich aus den übrigen Patentansprüchen sowie der nun folgenden Beschreibung mehrerer, nicht einschränkend zu verstehender Ausführungsbeispiele, die unter Bezugnahme auf die Zeichnung nun erläutert werden. In dieser Zeichnung zeigen:

Fig. 1      eine perspektivische Darstellung einer Kopfstütze mit jeweils zwei, ein Gelenkparallelogramm bildenden Gelenkgliedern und einer Koppel als Kupplungsvorrichtung,

Fig. 2      eine Darstellung ähnlich Figur 1 mit ebenfalls zweiarmigen Gelenkgliedern, bei denen die Kupplungsvorrichtung durch Zahnsegmente der zweiten Arme gebildet ist,

Fig. 3      eine Darstellung ähnlich Figur 1 mit zweiarmigen Gelenkgliedern, die jedoch um die Holme als Achse schwenkbar sind,

Fig. 4       eine Darstellung ähnlich Figur 1, jedoch mit
             einarmigen Gelenkgliedern, die jeweils für
             jedes Seitenteil parallel zueinander verlaufen,
             und

Fig. 5       eine Darstellung einer Rastvorrichtung für die
             Stützkissen in den Figuren 1 bis 4.

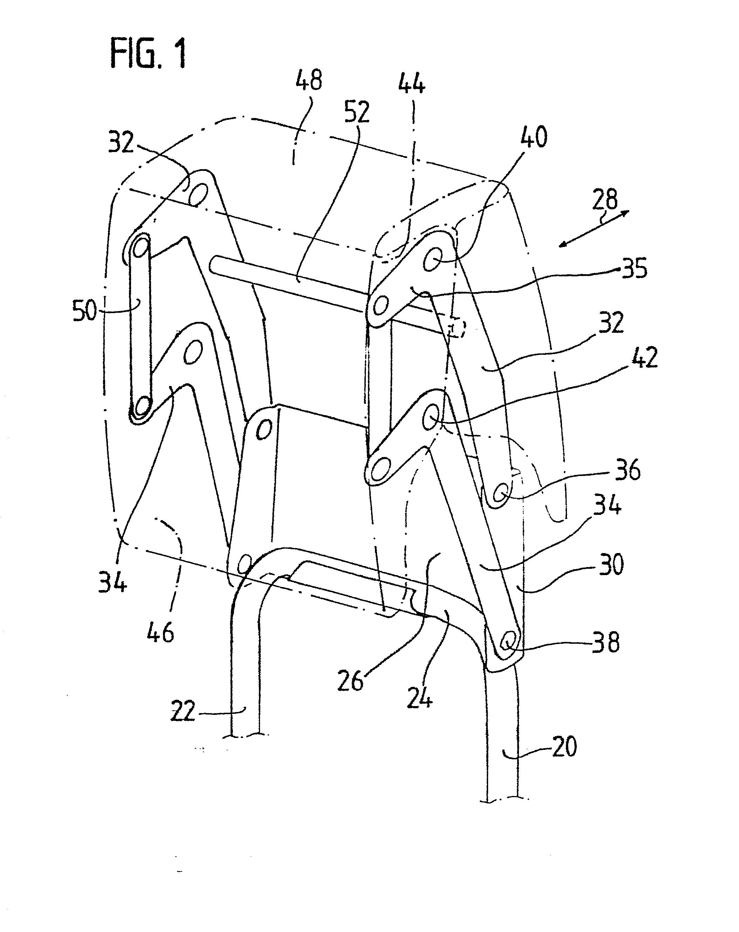

Bei der in Figur 1 gezeigten Kopfstütze eines Fahrzeugsitzes sind zwei Tragholme 20, 22 oben einstückig über eine Holmbasis 24 zu einem insgesamt U-förmigen Teil verbunden, an dem ein Träger 26 starr befestigt ist. Dieser hat zwei in Abstützrichtung 28 und damit rechtwinklig zu der von den Holmen 20, 22 und der Holmbasis 24 aufgespannten Ebene vorspringende Wangen 30, deren Abstand im wesentlichen dem Außenabstand der Holme 20, 22 entspricht. An jeder Wange 30 sind jeweils zwei zweiarmige Gelenkglieder 32, 34 an Gelenkpunkten 36, 38 angelenkt und jeweils um eine parallel zur Holmbasis 24 verlaufende Achse schwenkbar, auf der auch der Gelenkpunkt des spiegelbildlich gegenüberliegenden Gelenkgliedes 32 bzw. 34 der anderen Wange 30 liegt. Die Gelenkglieder 32, 34 sind im wesentlichen L-förmig, im Scheitelpunkt befinden sich Gelenkpunkte 40, 42, an denen die Gelenkglieder 32, 34 mit jeweils einem Seitenteil 44, 46 gelenkverbunden sind, das Teil eines starren Rahmens ist. Dieser Rahmen trägt wiederum ein strichpunktiert angedeutetes Stützkissen 48.

Die zweiten, nach vorn und im wesentlichen in Abstützrichtung 28 weisenden, kürzeren Arme 35 der Gelenkglieder 32, 34 sind an ihren freien Enden jeweils über eine Koppel 50 gelenkverbunden, die im wesentlichen parallel zu den Holmen 20, 22 verläuft. Die Gelenkpunkte 36 bis 42 sind Gelenkpunkte eines Parallelogramms, die Schenkel der Gelenkglieder 32, 34 jeder Seite verlaufen im wesentlichen parallel zueinander. Durch die Koppel 50 und eine (im gezeigten Ausführungsbeispiel die oberen) Gelenkglieder 32 starr verbindende Traverse 52 wird nun erreicht, daß die parallelogrammförmigen Vierecke beider Seiten stets exakt deckungsgleich sind. Anders ausgedrückt werden die Seitenteile 44, 46 und damit der Rahmen stets auf einer fest vorgegebenen Bahn gegenüber den Holmen 20, 22 zwangsgeführt, sie können sich insbesondere nicht gegenüber den Holmen winklig stellen.

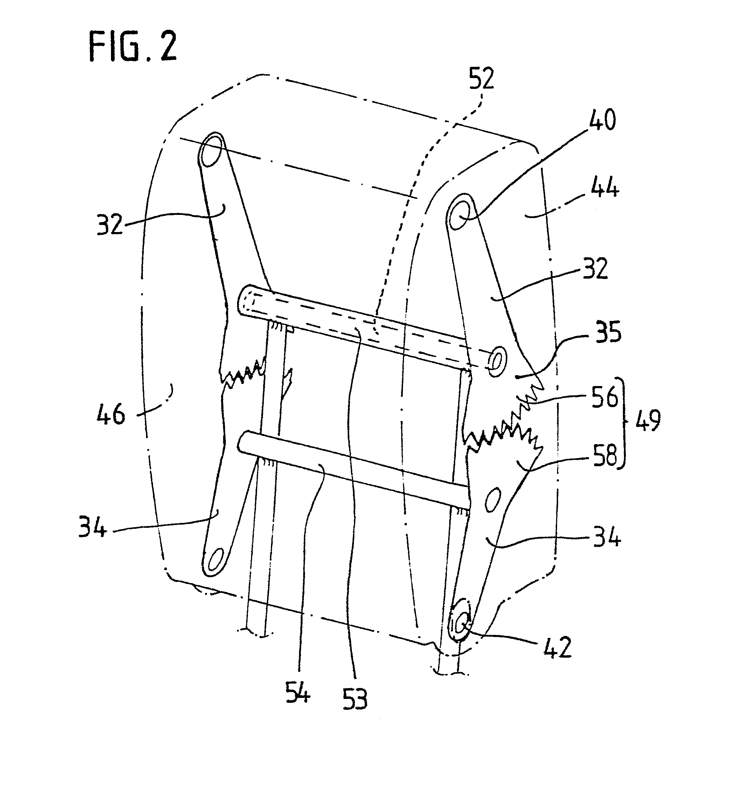

Im Ausführungsbeispiel nach Figur 2 schwenken die Gelenkglieder 32, 34 ebenfalls in der Ebene der Seitenteile 44, 46, sie sind ebenfalls zweiarmig ausgeführt und wiederum als flache Stanzteile ausgebildet. Als Träger sind zwei Traversen 53, 54 starr, in Abstand voneinander und rechtwinklig zu den beiden Holmen 20, 22 verlaufend mit den Holmen 20, 22 verbunden. An den überstehenden, freien Enden der Traverse 54 sind die unteren Gelenkglieder 34 angelenkt. In der oberen Traverse 53 ist eine Traverse 52 drehbar gelagert, die die beiden oberen Gelenkglieder 32 jeder Seite drehfest miteinander verbindet. Zwischen den Gelenkpunkten 36, 38 jeder Seite befinden sich die jeweils zweiten Arme der Gelenkglieder 32, 34, die jeweils mit im Eingriff miteinander befindlichen Zahnsegmenten 56, 58 ausgerüstet sind. Diese bilden wie die Koppel 50 eine Kupplungsvorrichtung 49 und sichern, daß die Gelenkglieder 32, 34 beider Seiten stets spiegelbildlich einander gegenüberliegen, wodurch eine Winkelstellung des Stützkissens 28 gegenüber den Holmen 20, 22 ausgeschlossen ist. Der obere Gelenkpunkt 40 der Gelenkglieder 32 ist ein normaler Gelenkpunkt, während der untere Gelenkpunkt 42 auf beiden Seiten jeweils als Schubgelenk ausgebildet ist, wobei ein vom jeweiligen Holm 20, 22 nach außen vorspringender Achsstummel in ein Langloch am freien Ende des ersten Armes des Gelenkgliedes 34 greift. Alternative Ausbildungen, beispielsweise des Schubgelenks selbst oder anstelle des Gelenkpunktes 40 sind möglich.

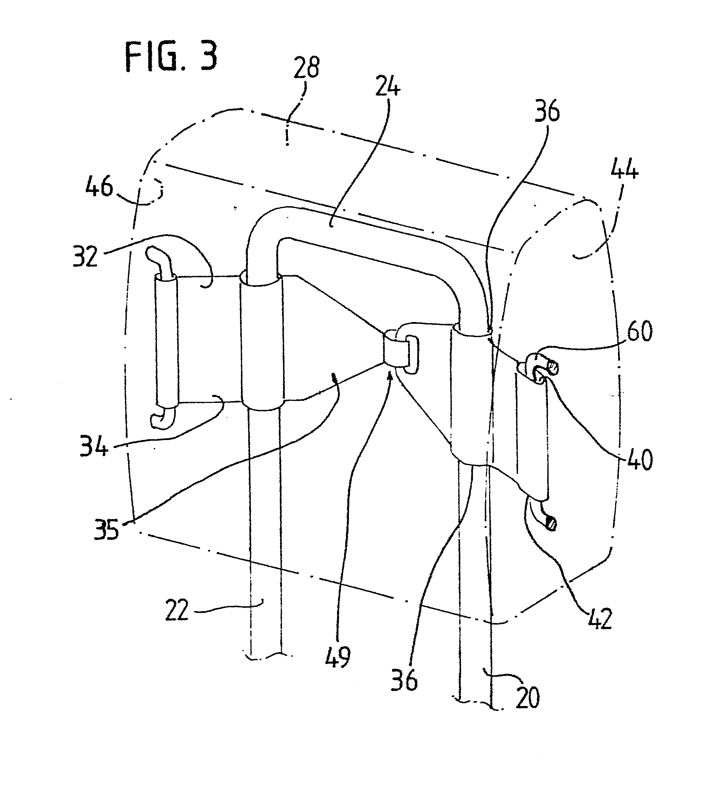

Im Gegensatz zu den bisher besprochenen Ausführungsbeispielen bewegen sich in Figur 3 die einteiligen Doppel-Gelenkglieder 32, 34, die dementsprechend eine relativ große Breite haben, nicht in der Ebene der Seitenteile 44, 46, sondern in Abstützrichtung 28, da sie nicht um parallel zur Holmbasis 24 verlaufende Achsen, sondern um die Holme 20, 22 als Achsen selbst schwenkbar sind. An jedem Seitenteil 44 bzw. 46 ist ein U-förmiger Bügel 60 mit relativ kurzen Schenkeln und langer Basis so befestigt, daß er zum jeweils anderen Seitenteil 46 bzw. 44 vorspringt. Er wird von den zusammengefaßten Gelenkgliedern 32, 34 unter Ausbildung der Gelenkpunkte 40, 42 umgriffen. Die Gelenkpunkte 36, 38 befinden sich im Bereich der Holme 20, 22. Zum Längenausgleich bei Schwenkbewegungen der zusammengefaßten Gelenkglieder 32, 34 sind die Gelenkpunkte 40, 42 am rechten U-Bügel 60 und damit am rechten Seitenteil 44 als Schubgelenk, d.h. mit einem Langloch versehen, ausgeführt.

Die jeweils zweiten Arme der Gelenkglieder 32, 34 sind in der Mittelebene der Kopfstütze über eine ebenfalls als Schubgelenk ausgebildete Kupplungsvorrichtung 49 miteinander verbunden. Hierbei umgreift das linke Doppelgelenkglied 32, 34 mit einer Langlochlasche einen im rechten Doppelgelenkglied 32, 34 einstückig ausgebildeten Steg.

Das Zusammenfassen der beiden Gelenkglieder 32, 34 jeder Seite zu einem relativ breiten Doppel-Gelenkglied bewirkt, daß ein Kippen des Stützkissens 48 um eine parallel zur Holmbasis 24 verlaufenden Achse weitgehend unterdrückt wird. Die Kupplungsvorrichtung 49 sichert eine stets gleiche, spiegelbildliche Winkelstellung der beiden Doppel-Gelenkglieder 32, 34 und gewährleistet damit, daß die Seitenteile 44, 46 immer exakt einander gegenüberliegen.

Wie im Ausführungsbeispiel nach Figur 1 sind die Holme 20, 22 einstückig über eine Holmbasis 24 zu einem insgesamt U-förmigen Rohrteil miteinander verbunden. Ein eigentlicher Träger ist nicht notwendig.

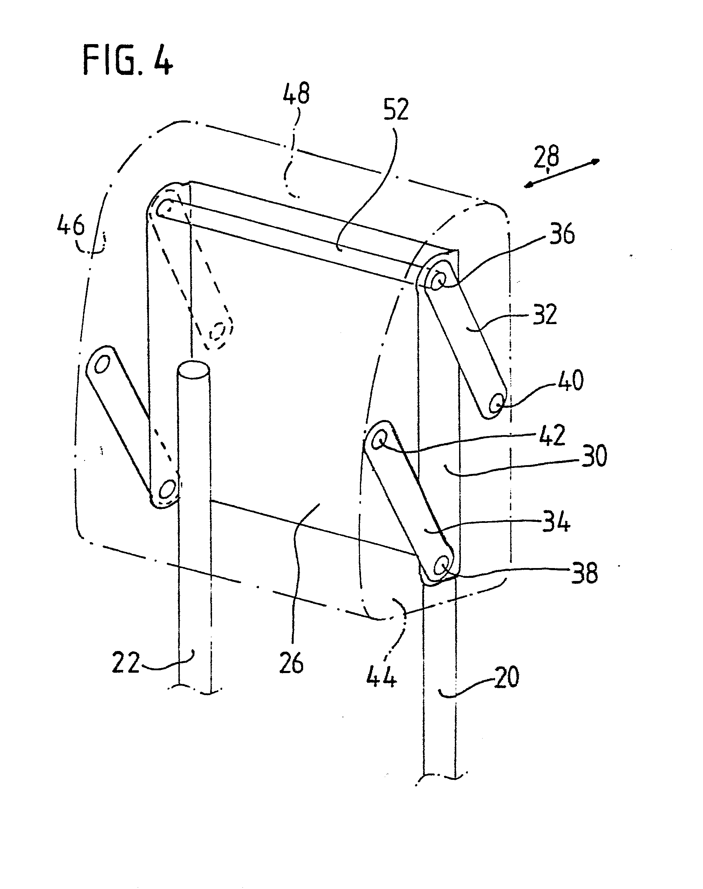

Im Ausführungsbeispiel nach Figur 4 schließlich sind die beiden Holme 20, 22 wiederum durch einen Träger 26 verbunden, der ebenfalls, wie bei Figur 1 zwei in Abstützrichtung 28 vorspringende Wangen 30 hat, an deren oberen und unteren Enden um Gelenkpunkte 36, 38 schwenkbar einarmige Gelenkglieder 32, 34 angelenkt sind, die parallel zueinander verlaufen. Sie sind ihrerseits an Gelenkpunkten 40, 42 mit jeweils einem Seitenteil 44, 46 gelenkverbunden. Insgesamt ergibt sich dadurch pro Seitenteil 44, 46 jeweils ein Gelenkviereck mit sich kreuzenden Gelenkgliedern, wobei die kreuzenden Gelenkglieder durch die Wange 30 und das Seitenteil 44 bzw. 46 gebildet sind. Im Ausführungsbeispiel sind die beiden oberen Gelenkglieder 32 jeder Seite gelenkfest über eine Traverse 52 gelenkverbunden, so daß stets gewährleistet ist, daß ihre Winkelstellung bezüglich der Holme 20, 22 exakt übereinstimmt. Damit wird aber auch eine deckungsgleiche Winkellage des Gelenkvierecks jeder Seite erzwungen.

Wie in den Ausführungsbeispielen nach den Figuren 1 und 2 sind die Gelenkglieder 32, 34 flache Stanzteile, die sich in der Ebene der Seitenteile 44, 46 bewegen. Sie sind wiederum untereinander deckungsgleich.

Die Höhenverstellung der gezeigten Kopfstütze erfolgt in an sich bekannter Weise durch die Halterungen der Holme 20, 22 in der nicht dargestellten Rückenlehne des zugehörigen Fahrzeugsitzes. Hierzu sind die Holme 20, 22 an ihren unteren, nicht gezeigten Endbereichen beispielsweise mit Vorsprüngen versehen, in die Rastelemente der Rückenlehne greifen. Damit ist es möglich, daß man durch Erfassen des Stützkissens 48 dieses einerseits in der Höhe und andererseits in Abstützrichtung 28 parallel verstellen kann.

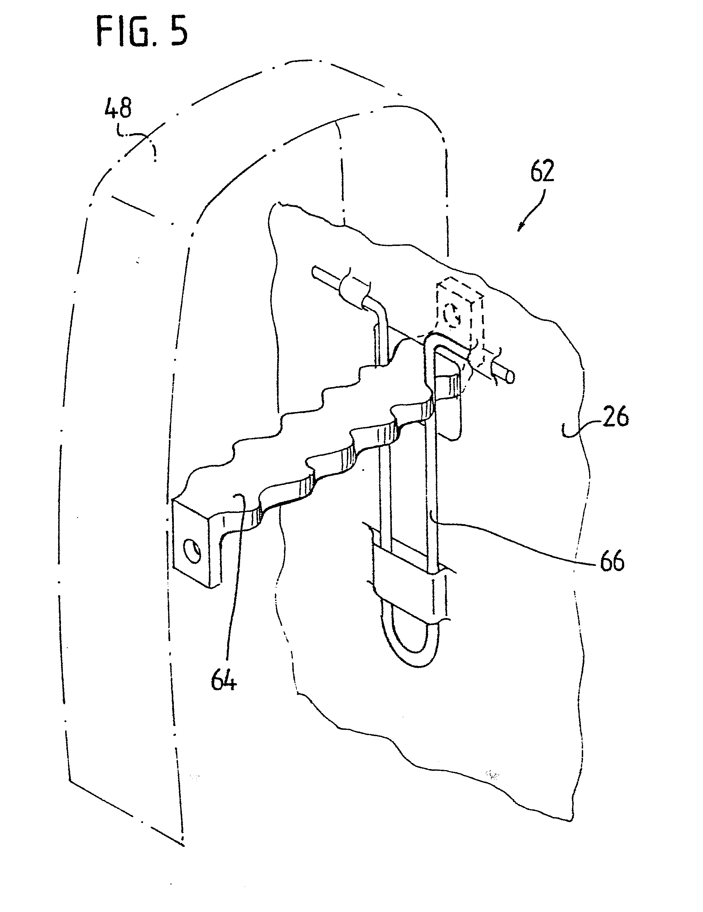

Die jeweils eingestellte Position des Stützkissens 48 in Abstützrichtung 28 kann grundsätzlich durch geeignete Maßnahmen, beispielsweise durch entsprechende Einstellung der Gelenkpunkte 36 bis 42 erreicht werden. Bevorzugt wird jedoch eine Rastvorrichtung 62, wie sie in Figur 5 perspektivisch dargestellt ist. Hier ist mit dem die Seitenteile 44, 46 verbindenden Rahmen ein in Abstützrichtung 28 verlaufendes, gerundete Rastflanken aufweisendes Rastteil 64 verbunden, das durch eine U-förmige Feder 66, die ihrerseits mit dem Träger 26 verbunden ist, beidseitig umgriffen und fixiert wird. Eine Einstellung des Stützkissens 48 in Abstützrichtung 28 erfordert damit eine gewisse Kraft, nämlich ein Aufspreizen der Feder 66, bis diese in eine andere Rastbucht der spiegelbildlich gegenüberliegenden Rastbuchten einschnappt.

Andere Ausbildungen der Rastvorrichtung 62 sind hierdurch nicht ausgeschlossen. Insbesondere können Rastvorrichtungen vorgesehen sein, bei denen die Rastflanken sägezahnförmig verlaufen, wodurch die Einstellung nach vorn in Abstützrichtung 28 deutlich weniger Kraft erfordert als die Einstellung nach hinten. Gegebenenfalls ist die Einstellung nach hinten erst möglich, wenn eine Sperre gelöst wird.

0153622

Anmelder:      Firma C. Rob. Hammerstein GmbH
               in 5650 Solingen 13

Bezeichnung: Kopfstütze eines Fahrzeugsitzes mit zwei an
             der Sitzlehne befestigbaren Tragholmen.

<u>Ansprüche</u>

1. Kopfstütze eines Fahrzeugsitzes mit zwei an der Sitzlehne befestigbaren Tragholmen (20, 22) und einem ein
   Stützkissen (48) tragenden Rahmen, der zwei starr miteinander verbundene Seitenteile (44, 46) aufweist, gelenkig mit den Tragholmen (20, 22) verbunden und quer
   zu diesen verstellbar ist,
   d a d u r c h   g e k e n n z e i c h n e t, daß zur Erzielung einer weitgehend parallelen Verstellung des
   Rahmens in Stützrichtung (28), praktisch ohne Höhenverstellung, an jedem Seitenteil (44, 46) jeweils zwei Gelenkglieder (32, 34) um Gelenkpunkte (40, 42) schwenkbar angelenkt sind und daß diese Gelenkglieder (32, 34)
   ihrerseits an den Tragholmen (20, 22) bzw. an einem mit
   diesen starr verbundenen Träger (26) in Gelenkpunkten
   (36, 38) angelenkt sind.

2. Kopfstütze nach Anspruch 1, gekennzeichnet durch eine
   Rastvorrichtung (62), die zwischen dem Rahmen des
   Stützkissens (48) und den Tragholmen (20, 22) angeordnet ist und vorzugsweise ohne einen separaten Auslösemechanismus verstellbar ist.

3. Kopstützte nach Anspruch 1 oder 2, dadurch gekennzeichnet, daß die Gelenkglieder (32, 34) als zweiarmige Hebel ausgeführt sind und daß die zusätzlichen zweiten Arme (35) miteinander mittels einer Kupplungsvorrichtung (49) bewegungsverbunden sind.

4. Kopfstütze nach Anspruch 3, dadurch gekennzeichnet, daß die Kupplungsvorrichtung (49) Zahnsegmente (56, 58), mindestens ein Schubgelenk, eine Koppel (50) oder eine Traverse (52) aufweist.

5. Kopfstütze nach einem der Ansprüche 1 bis 4, dadurch gekennzeichnet, daß zwei gleichartige Gelenkglieder (zum Beispiel 32) beider Seiten durch eine Traverse (52) starr miteinander verbunden sind.

6. Kopfstütze nach einem der Ansprüche 1 bis 5, dadurch gekennzeichnet, daß die Gelenkglieder (32, 34) jeder Seite unabhängig von der Einstellposition des Stützkissens (48) stets einander spiegelbildlich gegenüberliegen und deckungsgleiche Gelenkverecke ausbilden.

7. Kopfstütze nach einem der Ansprüche 1 bis 6, dadurch gekennzeichnet, daß mindestens zwei entsprechende Gelenkglieder (zum Beispiel 34) beider Seiten an Enden einer Traverse (54) angelenkt sind, die Teil des Trägers (26) ist.

8. Kopfstütze nach einem der Ansprüche 1 bis 7, dadurch gekennzeichnet, daß die Gelenkglieder (32, 34) L-förmige, als flache Stanzteile hergestellte, doppelarmige Hebel sind, deren erste Arme auf jeder Seite mit dem Träger (26) und jeweils einem Seitenteil (44 bzw. 46) ein Gelenkparallelogramm bilden und deren zweite Arme (35) an ihren freien Enden jeweils gelenkig über eine Koppel (50) miteinander verbunden sind.

9. Kopfstütze nach einem der Ansprüche 1 bis 7, dadurch gekennzeichnet, daß der Träger (26) durch zwei starr mit den Holmen (20, 22) verbundene, gegenüber den Holmen (20, 22) rechtwinklig verlaufende und im Abstand voneinander angeordnete Traversen (53, 54) gebildet ist, die doppelarmige Gelenkglieder (32, 34) lagern, deren jeweils zweiten Arm miteinander kämmende Zahnsegmente (56, 58) aufweist.

10. Kopfstütze nach einem der Ansprüche 1 bis 7, dadurch gekennzeichnet, daß die Gelenkglieder (32, 34) jeder Seite zu breiten, insbesondere mehrere Zentimeter breiten, Doppel-Gelenkgliedern zusammengefaßt sind, die jeweils um einen Holm (20 bzw. 22) schwenkbar sind, über mit jeweils einem Seitenteil (44, 46) verbundene U-Bügel (60) an ihren ersten Armen mit jeweils einem Seitenteil (44, 46) gelenkverbunden sind und die an den freien Enden ihrer zweiten Arme über eine Kupplungsvorrichtung (49) miteinander in Eingriff stehen und/oder daß an Wangen (30) eines Trägers (26) jeweils zwei einarmige, als flache Stanzteile gefertigte Gelenkglieder (32, 34) angelenkt sind, die parallel zueinander verlaufen und an ihren jeweiligen Endpunkten an Gelenkpunkten (40, 42) mit jeweils einem Seitenteil (44, 46) gelenkverbunden sind.

## FIG. 1

215

# FIG. 2

315

## FIG. 3

# FIG. 4

FIG. 5

48

62

26

66

64